# EUROPÄISCHE PATENTSCHRIFT

(11) **EP 1 217 836 B1**
(45) Veröffentlichungstag und Bekanntmachung des Hinweises auf die Patenterteilung: **28.01.2004**
(21) Anmeldenummer: 01130431.8
(22) Anmeldetag: 20.12.2001
(51) Int. Cl.: H04N 7/20, H04H 1/00

(54) **Twin-Konverteranordnung**
Twin converter
Biconvertisseur

(30) Priorität: 22.12.2000 DE 20021703 U
(43) Veröffentlichungstag der Anmeldung: 26.06.2002
(73) Patentinhaber: Kathrein-Werke KG, 83022 Rosenheim (DE)
(72) Erfinder: Exler, Ralf, 83059 Kolbermoor (DE); Linke, Christian, 83404 Ainring (DE); Flinner, Udo, 83059 Kolbermoor (DE)
(74) Vertreter: Flach, Dieter Dipl.-Ing

(56) Entgegenhaltungen:
- DE-A- 19 713 124
- DE-U- 29 716 786
- DE-U- 29 914 050

## Beschreibung

Die Erfindung betrifft eine Twin-Konverteranordnung nach dem Oberbegriff des Anspruchs 1.

Twin-Universal-LNBs sind hinlänglich bekannt, siehe DE-U-297 16 786, DE-U-299 1450, DE-A-197 1324. Mittels eines derartigen Twin-Universal-LNB ist es möglich von einer Satellitenposition ausgestrahlte Programme in einem unteren und beispielsweise oberen Frequenzband für zwei orthogonale Polarisationen zu empfangen. Dies gilt für nur einen zugeschalteten Teilnehmer, gleichermaßen aber auch dann, wenn zwei Teilnehmer zugeschaltet sind. Beide Teilnehmer können unabhängig voneinander Programme empfangen, die über die eine oder andere Polarisation in einem unteren oder oberen Frequenzband ausgestrahlt werden.

Aufgabe der vorliegenden Erfindung ist es, ein verbessertes Twin-LNB zu schaffen, dessen Anwendungsbereich gegenüber dem Stand der Technik erweitert ist.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Die erfindungsgemäße Twin-Konverteranordnung ist nunmehr so ausgelegt, dass sie als Teil einer Multifeed-Anordnung auch zum Empfang von über eine weitere Satellitenposition ausgestrahlten Programmen dienen kann. Üblicherweise erfolgt dies mittels einer einzigen Satellitenschüssel dann, wenn zwei Satellitenpositionen in enger orbitaler Position zueinander geostationär angeordnet sind, so dass mit einer "schielenden" Multifeed-Anordnung die von beiden geostationären Satelliten ausgestrahlten Programme empfangen werden können.

Zur Umsetzung dieses Konzeptes weist die Twin-Konverteranordnung zumindest einen weiteren Anschluss, nämlich einen zusätzlichen Eingang auf, der als Durchschleif-Eingang gestaltet ist. Über diesen Durchschleif-Eingang kann ein zugeordneter, angeschlossener Teilnehmer die über eine weitere Satellitenposition ausgestrahlten Programme empfangen.

Bevorzugt ist dabei die Twin-Konverteranordnung so aufgebaut, dass sie neben den üblichen Umschalt-Signalen 13/18 Volt bzw. 0/22 kHz auch die DiSEqC-Spezifikation über den zusätzlichen Durchschleif-Eingang verarbeiten kann, wobei der eigentliche Ausgang, an dem ein zugehöriger Teilnehmer anschließbar ist, je nach Bedarf zwischen dem eigentlichen Ausgang der Twin-Konverteranordnung (Twin-LNB's) zum Empfang der über eine erste Satelliten-Position ausgestrahlten Programme und dem Durchschleif-Eingang umschaltbar ist, worüber die über eine zweite Satelliten-Position ausgestrahlten Programme über einen an diesem Durchschleif-Eingang angeschlossenen weiteren LNB empfangbar sind.

In einer bevorzugten Ausführungsform ist die erfindungsgemäße Twin-Konverteranordnung als Doppel-Twin-Konverteranordnung geschaltet, wobei jeder der beiden Twin-Receiver einen entsprechenden vorstehend erläuterten zusätzlichen Durchschleif-Eingang aufweist. Bei einer derartigen Multifeed-Anordnung ist an den beiden Twin-Konverteranordnungen jeweils nur ein Teilnehmer angeschlossen, wobei der jeweilige Ausgang für den zweiten Teilnehmer an dem Durchschleif-Eingang der jeweils weiteren Twin-Konverteranordnung angeschlossen ist. Somit können beide Teilnehmer die von beiden Satellitenpositionen ausgestrahlten Programme ggf. in einem unteren oder oberen Frequenzband in beiden Polarisationen empfangen.

Da durch die kreuzweise Verschaltung der beiden Twin-Konverteranordnungen aus Sicht des jeweiligen Teilnehmers die von einer ersten und zweiten Satellitenposition empfangenen Programme an unterschiedlichen Einstellpositionen empfangen werden ist bevorzugt vorgesehen, dass die Twin-Konverteranordnung neben den beiden Ausgängen und dem zusätzlichen Durchschleif-Eingang noch einen weiteren Kodierungseingang aufweist, der keine HF-Signale liefert und insoweit "passiv" geschaltet ist. Durch die hierdurch ermöglichte Kodierung kann jedoch der Positionswert eines LNB-Zweigs von der Grundeinstellung "Default A" in "Default B" gewandelt werden. Der zweite LNB-Zweig enthält damit eine entsprechende Zuordnung der jeweils anderen Satellitenposition.

Die Erfindung wird nachfolgend anhand von Zeichnungen näher erläutert. Dabei zeigen im einzelnen:
- Figur 1 :: die schematische Wiedergabe eines Twin-Konverters in herkömmlicher Bauweise mit zugeschaltetem erfindungsgemäß vorgesehenen Durchschleif-Eingang;
- Figur 2 :: eine schematische Darstellung der an der Twin-Konverteranordnung vorgesehenen Ausgänge und Eingänge einschließlich eines Kodiereingangs;
- Figur 3 :: eine erste Multifeed-Schaltungsanordnung, mittels derer einer von zwei Teilnehmern Programme empfangen kann, die über zwei Satellitenpositionen ausgestrahlt werden; und
- Figur 4 :: eine zu Figur 3 erweiterte Multifeed-Anordnung unter Verwendung zweier Twin-Konverteranordnungen, die es erlaubt, dass zwei angeschlossene Teilnehmer die von zwei Satellitenpositionen ausgestrahlten Programme empfangen können.

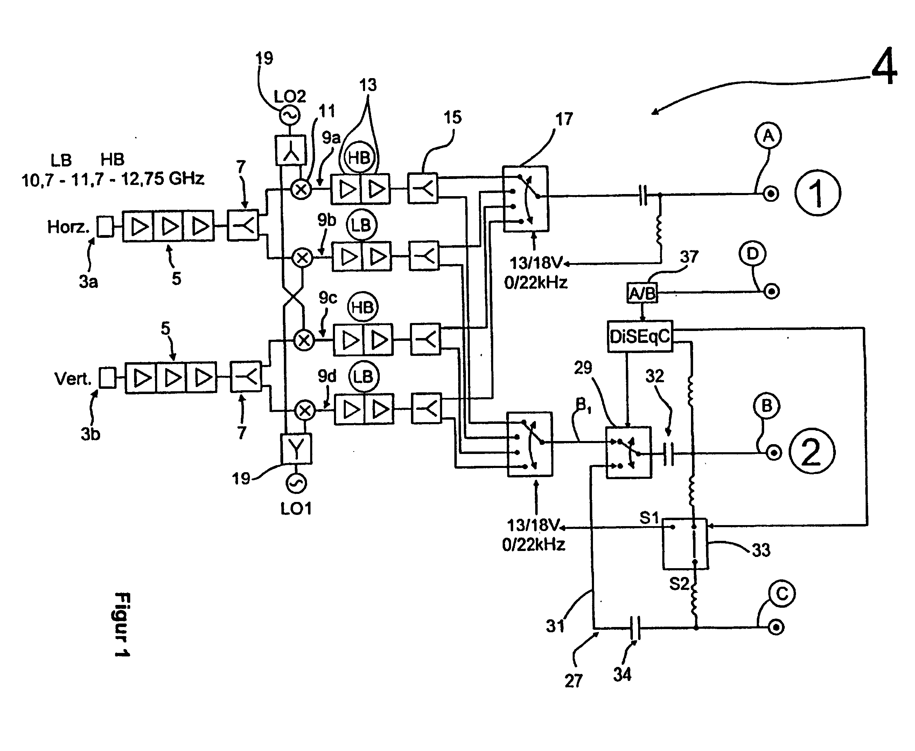

Nachfolgend wird auf Figur 1 Bezug genommen, die eine Twin-Loop-Through-Konverteranordnung zeigt, die nachfolgend teilweise auch nur kurz als Twin-Konverteranordnung oder Twin-Universal-Konverter oder ähnlich bezeichnet wird.

Der Twin-Universal-Konverter 4 ist mit zwei Eingängen 3a und 3b versehen. Dem Eingang 3a wird dabei die horizontale Polarisation und dem Eingang 3b die vertikale Polarisation zugeführt, um die von einem Satelliten über die horizontale Position bzw. die vertikale Polarisation ausgestrahlten Programme empfangen zu können. Der Twin-Universal-Konverter 4 ist dabei so ausgelegt, dass sowohl über die horizontale Polarisation wie über die vertikale Polarisation beispielsweise ein unteres Frequenzband LB (z.B. von 10.7 - 11.7 GHz) wie aber auch ein oberes Frequenzband HB (beispielsweise von 11.7 - 12.75 GHz) empfangen werd4en kann.

Den erwähnten beiden Eingängen 3a und 3b können Eingangs- oder Zwischenverstärker 5 nachgeordnet sein, worüber die entsprechenden Frequenzbänder jeweils einer Frequenzweiche bzw. einem Leistungsteiler 7 zugeführt werden.

Die Twin-Konverteranordnung 4 weist somit vier Zweige 9a bis 9d auf, nämlich jeweils mit einem Mischer 11, ggf. mit einer oder mit mehreren nachgeordneten Verstärkerstufen 13 und mit einem ausgangsseitigen Verzweiger 15, so dass jeder Teilnehmer 1 und 2 über die entsprechend geschaltete ausgangsseitige Schaltmatrix 17 und über einen der vier LNB-Zweige 9a bis 9d die über die vertikalen oder horizontalen Polarisationen in einem unteren oder oberen Frequenzband ausgestrahlten Programme empfangen kann. Aus Vereinfachungsgründen können dabei den in den vier Zweigen vorgesehenen Mischern 11 jeweils nur zwei Lokaloszillatoren 19 zugeordnet sein, die ausgangsseitig jeweils mit zwei Mischern in Verbindung stehen.

Die Teilnehmer 1 bzw. 2 können durch Umschaltung von 13 auf 18 Volt bzw. von 0 kHz auf 22 kHz eine Umschaltung auf einen der vier Empfangszweige vornehmen.

Neben den beiden teilnehmerseitigen Ausgängen A und B₁ ist nunmehr eine Zuschalteinrichtung 27 zugeschaltet, wodurch ein weiterer Eingang C und ein sogenannter Kodiereingang D gebildet werden. Dabei wird der an sich hinter der Schaltmatrix 17 liegende Ausgang B₁ für den zweiten Teilnehmer über einen nachfolgend noch erörterten Umschalter 29 auf den eigentlichen Ausgang B durchgeschaltet, an dem der Teilnehmer 2 angeschlossen wird.

Der Eingang C dient als Durchschleif-Eingang zum Anschluss eines zweiten LNB-Receivers, über den nicht nur die Programme einer Satellitenposition X, sondern auch die Programme, die von einer weiteren Satellitenposition Y ausgestrahlt werden, empfangen werden können.

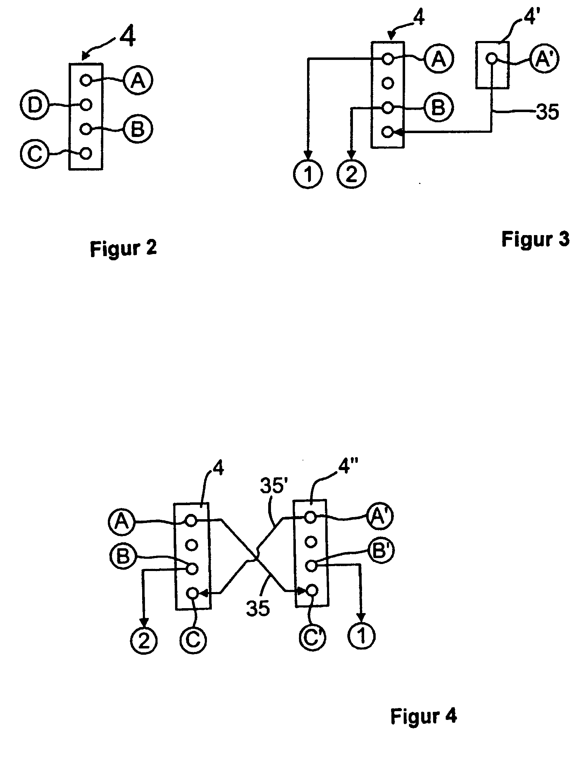

Die Zuschalteinrichtung 27 umfasst dabei den schon erwähnten Umschalter 29, worüber für den zweiten Teilnehmer eine Umschaltung vorgenommen werden kann, wenn er nämlich anstelle der von der Satellitenposition X ausgestrahlten Programme nunmehr die von einer zweiten Satellitenposition Y ausgestrahlten Programme über einen zuschaltbaren LNB und über den Durchschleif-Eingang C sowie die nachfolgende Umschaltleitung 31 empfangen möchte. Da sowohl der Ausgang B als auch der Durchschleifeingang C eine Kondensatorschaltung 32, 34 zur galvanischen Trennung umfassen, ist ein weiterer Energieversorgungsumschalter 33 vorgesehen, der ebenfalls vom zweiten Teilnehmer 2 bei Umschaltung zum Empfang der Programme von Satellit X auf Satellit Y entsprechend umgeschaltet wird. Die Schaltung erfolgt dabei mittels des DiSEqC-Protokolls. Auf den in Figur 1 angedeuteten zusätzlichen Kodiereingang D wird noch später eingegangen. Anhand von Figur 2 ist nunmehr gezeigt, dass eine entsprechende Twin-Konverteranordnung neben den beiden Ausgängen A und B zum Anschluss der beiden Teilnehmer 1 und 2 noch den erwähnten zusätzlichen Durchschleif-Eingang C und ggf. noch einen nachfolgend erörterten aber nicht zwingend notwendigen Kodiereingang D aufweist.

Eine derartige Twin-Konverteranordnung kann nunmehr zur Realisierung einer Multifeed-Empfangsanlage mit einem Single-LNB komplettiert werden, dessen Ausgang A' über eine Verbindungsleitung 35 mit dem Durchschleif-Eingang C der Twin-Konverteranordnung 4 verbunden wird. Der daran angeschlossene Teilnehmer 2 kann nunmehr je nach Betätigung des Umschalters 29 zusammen mit der Umschalteinrichtung 33 hin und her umschalten, ob er mittels der Twin-Konverteranordnung 4 die von der Satellitenposition X empfangenen Programme (in einem oberen oder unteren Frequenzband bezüglich beider Polarisationen) oder die von dem zugeschalteten Single-LNB 4' empfangenen Programme, die von einer weiteren Satellitenposition ausgestrahlt werden, erhalten möchte. Auch hier ist der LNB üblicherweise so aufgebaut, dass die über die Satellitenposition Y ausgestrahlten Programme in einem oberen oder unteren Frequenzband für beide Polarisationen empfangen werden können.

Teilnehmer 1 kann, wie beim Stand der Technik auch, nur die Programme in den verschiedenen Frequenzbändern für beide Polarisationen bezüglich der Satellitenposition X empfangen.

Bei dem Ausführungsbeispiel gemäß Figur 4 sind nunmehr zwei derartige Twin-Konverteranordnungen 4 und 4" so zusammengeschaltet, dass jeweils der eine Ausgang A der ersten Twin-Konverteranordnung 4 mit dem Durchschleif-Eingang (C') der zweiten Twin-Konverteranordnung 4" über eine Verbindungsleitung 35 verbunden ist, und dass umgekehrt der Ausgang A' der zweiten Twin-Konverteranordnung über eine Verbindungsleitung 35' mit dem Durchschleif-Eingang C der ersten Twin-Konverteranordnung 4 verbunden ist. An dem jeweils zweiten Ausgang B der ersten Twin-Konverteranordnung 4 ist nunmehr ein erster Teilnehmer 1 und an dem zweiten Ausgang B' der zweiten Twin-Konverteranordnung 4" der zweite Teilnehmer 2 angeschlossen.

Damit können also beide Teilnehmer 1 und 2 unabhängig voneinander alle Programme empfangen, die von beiden Satellitenpositionen X und Y ausgestrahlt werden, wobei der erste Teilnehmer 1 über den Twin-Konverter 4" die über die Satellitenposition Y ausgestrahlten Programme und über den Twin-Konverter 4 die über die Satellitenposition X ausgestrahlten Programme empfängt. Demgegenüber empfängt der Teilnehmer 2 über den Twin-Konverter 4 die über Satellitenposition X und über den Twin-Konverter 4" die über die Satellitenposition Y ausgestrahlten Programme.

Aus der vorstehenden Schilderung ergibt sich, dass die Sichtweise des ersten Teilnehmers 1 umgekehrt zur Sichtweise des Teilnehmers 2 ist. Um hier eine gleichartige übereinstimmende Beschaltung und Zuordnung der Satelliten vornehmen zu können, weist zumindest eine der Twin-Konverteranordnungen (bevorzugt jedoch beide Twin-Konverteranordnungen) jeweils den erwähnten Kodiereingang D auf, der aber nur bei einem der beiden Twin-Konverter 4 oder 4" aktiviert werden muss. Dieser nicht der HF-Übertragung dienende und somit lediglich passive Kodiereingang wird also benutzt, um über eine Wechselschaltung 37 (Figur 1) eine Umschaltung der Position X auf Y bei einem Teilnehmer vorzunehmen.

Nachdem also bei einem Teilnehmer die entsprechende Kodierung aktiviert wurde, führt dies dazu, dass sowohl Teilnehmer 1 als auch Teilnehmer 2 über den scheinbar gleichen Twin-Konverter 4 beispielsweise die über den Konverter 4 von der Satellitenposition X und über den Twin-Konverter 4" die von der weiteren Satellitenposition Y ausgestrahlten Programme empfangen können.

Die geschilderten Vorteile werden also durch eine Twin-Konverteranordnung realisiert, die einen zusätzlichen Loop-Through-Eingang C aufweist, der bevorzugt nach der DiSEqC-Spezifikation für Loop-Through-Single-LNB (Konverter) betrieben wird.

Dieser zusätzliche Durchschleif-Eingang C wird in einer vereinfachten Ausführungsform nur einem Teilnehmerausgang zugeordnet. Dieser Teilnehmerausgang muss nun lediglich die Kontrollsignale nach dem DiSEqC-Protokoll 1.0 oder höher (insbesondere wenn eine Positionsumschaltung X/Y mittels eines Kodiereingangs vorgenommen werden soll) auswerten können, um bei jedem Positions-Schaltzustand die Umschalt-Signale 13/18 Volt und 0/22 kHz für die Konverter auswerten zu können.

Bevorzugt ist die "Default"-Einstellung für den ersten Konverter (LNB) die Satellitenposition X und für den durchgeschleiften zweiten LNB die Position Y.

## Patentansprüche

1. Twin-Konverteranordnung mit zumindest zwei Ausgängen (A, B) zum Anschluss eines ersten und zweiten Teilnehmers (1, 2), worüber jeder Teilnehmer (1, 2) unabhängig vom anderen die von einer ersten Satellitenposition (X) ausgestrahlten Programme in einem unteren oder oberen Frequenzband (LB, HB) für eine erste oder zweite Polarisation (V, H) empfangen kann, **gekennzeichnet durch** die folgenden weiteren Merkmale
- die Twin-Konverteranordnung (4, 4") ist so ausgelegt, dass sie als Teil einer Multifeed-Anordnung einsetzbar ist, über die zumindest ein Teilnehmer auch die über eine zweite Satellitenposition (Y) ausgestrahlten Programme empfangen kann,
- die Twin-Konverteranordnung (4, 4") weist neben zumindest einem Eingang, vorzugsweise zwei Eingängen (3a, 3b), zum Empfang von Programmen, die über die erste Satelliten-Position (X) ausgestrahlt werden, und neben den zumindest zwei Ausgängen (A, B; A', B') zumindest einen zusätzlichen Eingang (C; C') auf, dem ein Ausgang (B) der zumindest beiden vorhandenen Ausgänge sowie der diesem einen Ausgang (B) zugehörige Teilnehmer (2) zugeordnet sind,
- der zumindest eine zusätzliche Eingang (C; C') ist als Durchschleif-Eingang und Teil einer Durchschleif-Vorrichtung (27) der Twin-Konverteranordnung konzipiert und mittels eines vom zugeordneten Teilnehmer (2) steuerbaren Umschalters (29) in der Durchschleif-Vorrichtung so aktivierbar, dass an dem genannten zugeordneten Ausgang (B, B') bei nicht aktiviertem Durchschleif-Eingang die von der ersten Satellitenposition (X) und bei aktiviertem Durchschleif-Eingang die von der zweiten Satellitenposition (Y) ausgestrahlten Programme empfangbar sind, die nach Konvertierung mittels eines zuschaltbaren Konverters (LNB; 4'; 4") über den Durchschleif-Eingang (C; C') eingespeist werden.

2. Twin-Konverteranordnung nach Anspruch 1, **dadurch gekennzeichnet, dass** der Umschalter (29) mit zwei umschaltbaren Eingängen versehen ist, wobei der eine Eingang des Umschalters (29) mit dem diesem Teilnehmer (2) zugeordneten Ausgang (B₁) einer Schaltmatrix (17) der Twin-Konverteranordnung (4, 4") und der andere Eingang des Umschalters (29) mit dem Durchschleif-Eingang (C) verbunden ist.

3. Twin-Konverteranordnung nach Anspruch 1 oder 2, **dadurch gekennzeichnet, dass** sie den zuschaltbaren Konverter umfasst und dieser zum Empfang der über die zweite Satellitenposition (Y) ausgestrahlten Programme zumindest aus einem Single-LNB Konverter besteht.

4. Twin-Konverteranordnung nach einem der Ansprüche 1 bis 3, **dadurch gekennzeichnet, dass** sie Mittel zur Steuerung des Umschalters (29) mittels des DiSEqC-Protokolls umfasst, worüber die von den Satellitenpositionen (X) und (Y) ausgestrahlten Programme empfangbar sind.

5. Doppel-Twin-Konverteranordnung mit einer ersten Twin-Konverteranordnung (4) nach einem der Ansprüche 1 bis 4, **dadurch gekennzeichnet, dass** sie zur Realisierung einer Multifeed-Empfangsanordnung für zwei zuschaltbare Teilnehmer (1, 2) eine zweite Twin-Konverteranordnung (4") entsprechend dem in den Ansprüchen 1 bis 4 genannten zuschaltbaren Konverter umfasst, wobei der eine Ausgang (A) der ersten Twin-Konverteranordnung (4) mit dem Durchschleif-Eingang (C') der zweiten Twin-Konverteranordnung (4") und der erste Ausgang (A') der zweiten Twin-Konverteranordnung (4") mit dem Durchschleif-Eingang (C) der ersten Twin-Konverteranordnung (4) verbindbar oder verbunden ist, und wobei an dem verbleibenden Ausgang (B) der ersten Twin-Konverteranordnung (4) der eine Teilnehmer (1) und an dem verbleibenden Ausgang (B') der zweiten Twin-Konverteranordnung (4") der andere Teilnehmer (2) zuschaltbar ist.

6. Twin-Konverteranordnung nach einem der Ansprüche 1 bis 5, **dadurch gekennzeichnet, dass** sie zumindest einen zusätzlichen Kodiereingang (D, D') und eine Wechselschaltung (37) aufweist, mittels welcher ein über den genannten zugeordneten Ausgang (B; B') eingespeistes Steuersignal zur Auswahl einer der Konverteranordnungen (4, 4") entsprechend einer aus den zwei Satellitenpositionen (X, Y) ausgewählten Satellitenposition (X) derart wandelbar ist, dass die der nicht gewählten Satellitenposition (Y) entsprechende Konverteranordnung ausgewählt wird.

## Claims

1. Twin converter arrangement having at least two outputs (A, B) for connection of a first and second subscriber (1, 2), via which each subscriber (1, 2) can, independently of the other, receive the programs transmitted from a first satellite position (X) in a lower or upper frequency band (LB, HB) for a first or second polarization (V, H), **characterized by** the following further features,
- the twin converter arrangement (4, 4'') is designed such that it can be used as part of a multifeed arrangement, via which at least one subscriber can also receive the programs transmitted via a second satellite position (Y),
- in addition to at least one input, the twin converter arrangement (4, 4") preferably has two inputs (3a, 3b) for receiving programs which are transmitted via the first satellite position (X) and, in addition to the at least two outputs (A, B; A', B'), has at least one additional input (C; C') with which an output (B) of the at least two available outputs as well as the subscriber (2) associated with this one output (B) are associated,
- the at least one additional input (C; C') is designed as a through-connection input and as part of a through-connection apparatus (27) of the twin converter arrangement, and can be activated by means of a changeover switch (29), which can be controlled by the associated subscriber (2), in the through-connection apparatus, such that, when the through-connection is not activated, the programs which are transmitted from the first satellite position (X) and, when the through-connection input is activated, the programs which are transmitted from the second satellite position (Y) can be received at the said associated output (B, B'), and, after conversion by means of a converter (LNB; 4', 4'') which can be connected, are fed via the through-connection input (C; C').

2. Twin converter arrangement according to Claim 1, **characterized in that** the changeover switch (29) is provided with two switchable inputs, with one input of the changeover switch (29) being connected to the output (B₁) of the switching matrix (17) of the twin converter arrangement (4, 4'') that is associated with the subscriber (2), and the other input of the changeover switch (29) being connected to the through-connection input (C).

3. Twin converter arrangement according to Claim 1 or 2, **characterized in that** the twin converter arrangement comprises the converter which can be connected, and this converter comprises at least one single-LNB converter for receiving the programmes which are transmitted via the second satellite position (Y).

4. Twin converter arrangement according to one of Claims 1 to 3, **characterized in that** the twin converter arrangement comprises means for controlling the changeover switch (29) by means of the DiSEqC protocol, via which the programs which are transmitted from the satellite positions (X) and (Y) can be received.

5. Double twin converter arrangement having a first twin converter arrangement (4) according to one of Claims 1 to 4, **characterized in that,** in order to provide a multifeed receiving arrangement for two subscribers (1, 2) that can be connected, the double twin converter arrangement comprises the second twin converter arrangement (4'') corresponding to the converter which can be connected as mentioned in Claims 1 to 4, in which case one output (A) of the first twin converter arrangement (4) can be connected or is connected to the through-connection input (C') of the second twin converter arrangement (4''), and the first output (A') of the second twin converter arrangement (4") can be connected or is connected to the through-connection input (C) of the first twin converter arrangement (4), and in which case one subscriber (1) can be connected to the remaining output (B) of the first twin converter arrangement (4) and the other subscriber (2) can be connected to the remaining output (B') of the second twin converter arrangement (4'').

6. Twin converter arrangement according to one of Claims 1 to 5, **characterized in that** the twin converter arrangement has at least one additional coding input (D, D') and a changeover circuit (37), by means of which a control signal which is fed in via the said associated output (B; B') can be converted for selection of one of the converter arrangements (4, 4'') corresponding to a satellite position (X) which is chosen from the two satellite positions (X, X'), by choosing the converter arrangement which corresponds to the satellite position (Y) which is not chosen.

## Revendications

1. Agencement biconvertisseur ("convertisseur TWIN"), comprenant au moins deux sorties (A, B) pour la connexion d'un premier abonné et d'un deuxième abonné (1, 2), via lequel chaque abonné (1, 2) peut recevoir, indépendamment de l'autre, les programmes émis par une première position de satellite (X) dans une bande de fréquences inférieure ou supérieure (LB, HB) pour une première ou une deuxième polarisation (V, H), **caractérisé par** les autres caractéristiques suivantes :
- l'agencement biconvertisseur (4, 4") est conçu de manière telle qu'il peut être utilisé en tant que partie d'un agencement d'alimentation multiple (multifeed), via lequel ledit au moins un abonné peut recevoir aussi les programmes émis via une deuxième position de satellite (Y),
- l'agencement biconvertisseur (4, 4") présente en plus d'au moins une entrée, de préférence au moins deux entrées (3a, 3b) pour recevoir des programmes qui sont émis via la première position de satellite (X), et en plus des au moins deux sorties (A, B ; A', B') au moins une entrée additionnelle (C ; C') à laquelle sont associés une sortie (B) desdites au moins deux sorties existantes ainsi que l'abonné (2) appartenant à cette sortie (B),
- ladite au moins une entrée (C ; C') additionnelle est conçue en tant qu'entrée à bouclage et en tant que partie d'un dispositif de bouclage (27) de l'agencement biconvertisseur, et elle peut être activée dans le dispositif à bouclage au moyen d'un commutateur (29) commandable par l'abonné (2) associé, de telle sorte qu'à ladite sortie (B, B') associée, on peut recevoir les programmes émis par la première position de satellite (X), lorsque l'entrée à bouclage n'est pas activée, et par la deuxième position de satellite (Y) lorsque l'entrée à bouclage est activée, programmes qui sont alimentés via l'entrée à bouclage (C ; C') après la conversion au moyen d'un convertisseur (LNB ; 4' ; 4") susceptible d'être mis en circuit.

2. Agencement biconvertisseur selon la revendication 1, **caractérisé en ce que** le commutateur (29) est pourvu de deux entrées commutables, l'une des entrée du commutateur (29) étant reliée à la sortie (B₁), associée à cet abonné (2), d'une matrice de commutation (17) de l'agencement biconvertisseur (4, 4"), et l'autre entrée du commutateur (29) étant reliée à l'entrée à bouclage (C).

3. Agencement biconvertisseur selon l'une ou l'autre des revendications 1 et 2, **caractérisé en ce qu'**il comprend le convertisseur susceptible d'être mis en circuit et **en ce que** celui-ci est constitué au moins par un mono-convertisseur LNB pour recevoir les programmes émis via la deuxième position de satellite (Y).

4. Agencement biconvertisseur selon l'une des revendications 1 à 3, **caractérisé en ce qu'**il comprend des moyens de commande du commutateur (29) au moyen du protocole DiSEqC, via lequel on peut recevoir les programmes émis par les positions de satellite (X) et (Y).

5. Double agencement biconvertisseur comportant un premier agencement biconvertisseur (4) selon l'une des revendications 1 à 4, **caractérisé en ce que** pour réaliser un agencement de réception à alimentation multiple (multifeed) pour deux abonnés (1, 2) susceptibles d'être mis en circuit, il comprend un deuxième agencement biconvertisseur (4") correspondant au convertisseur susceptible d'être mis en circuit énoncé aux revendications 1 à 4, une des sorties (A) du premier agencement biconvertisseur (4) pouvant être reliée ou étant reliée à l'entrée à bouclage (C') du deuxième agencement biconvertisseur (4"), et la première sortie (A') du deuxième agencement biconvertisseur (4") pouvant être reliée ou étant reliée à l'entrée à bouclage (C) du premier agencement biconvertisseur (4), et un des abonné (1) pouvant être mis en circuit à la sortie (B) restante du premier agencement biconvertisseur (4), et l'autre abonné (2) pouvant être mis en circuit à la sortie (B') restante du deuxième agencement biconvertisseur (4").

6. Agencement biconvertisseur selon l'une des revendications 1 à 5, **caractérisé en ce qu'**il présente au moins une entrée de codage (D, D') additionnelle et un circuit inverseur (37) au moyen duquel un signal de commande, appliqué via la sortie (B ; B') associée, est convertible pour choisir un des agencements convertisseurs (4, 4") en fonction d'une position de satellite (X) choisie parmi les deux positions de satellite (X, Y), de telle sorte que l'on choisit l'agencement convertisseur correspondant à la position de satellite (Y) non choisie.
